# EUROPEAN PATENT APPLICATION

(11) **EP 4 206 941 A1**
(43) Date of publication of application: **05.07.2023**
(21) Application number: 21873747.6
(22) Date of filing: 28.09.2021
(51) Int. Cl.: G06F 13/42, A01B 79/00

(54) **COMMUNICATION AND CONTROL SYSTEM FOR PERIPHERAL EQUIPMENT IN AGRICULTURAL TOOLS AND COMMUNICATION AND CONTROL METHOD FOR PERIPHERAL EQUIPMENT USED IN AGRICULTURAL TOOLS**

(30) Priority: 30.09.2020 BR 102020020116
(71) Applicant: Do Amaral Assy, José Roberto, 75690-000 Caldas Novas, GOIÁS (BR)
(72) Inventor: BASTOS DE ALMEIDA, Igor Luiz, 04142-081 São Paulo - SP (BR); LAMARDO ALVES SILVA, Luiz Otávio, 01545-040 São Paulo - SP (BR); DO AMARAL ASSY, José Roberto, 75690-000 Caldas Novas, GOIÁS (BR)
(74) Representative: Tansini, Elio Fabrizio
(86) International application number: PCT/BR2021/050417
(87) International publication number: WO 2022/067411

(57) **Abstract**

The present invention relates to systems and methods for communication and control applied to agricultural machinery and implements, and more specifically to communication and control means of peripheral devices applied to row units of planters. The communication and control system for peripheral equipment in agricultural implements, which includes a human-machine interface, first communication means, a control module, first processing means, second communication means, a remote module, second processing means, and third communication means.

## Description

### FIELD OF THE INVENTION

The present invention refers to communication and control systems applied to agricultural machinery and implements, more specifically, it refers to communication and control means of peripheral devices used in row units of planters.

### BACKGROUND OF THE INVENTION

Technological applications are increasingly used in the agricultural sector with the aim of optimizing the use of planting fields, making the use of inputs more accurate. Consequently, the planting processes become more efficient, so that eventual waste is minimized and the planting results bring greater yields and more profitability to farmers.

When planting large fields, agricultural implements called planters or sowing machines are generally used. These implements are conventionally pulled by tractors and have a plurality of row units, with each row unit using a plurality of peripherals for dosing and controlling the precision of planting.

The control of precision peripherals is commonly done from the tractor cabin where the driver can check the status of each peripheral and send commands to change operating parameters. The communication between the tractor cabin and the peripherals is usually done through cables that run through the entire planter and row units.

Communication through cables running through the entire agricultural implement has some drawbacks, mainly related to manufacturing and maintenance. with regard to manufacturing, the projects must provide that the path traveled by the tractor cables to the peripherals has numerous joints and junction points that may have gaps, and in these joints and junctions the cable is subject to tensions and frictions arising from the vibrations and normal movement of the planter by the planting fields. In this way, even cabling installed providing for such joints and junctions are subject to the natural wear and tear of movement and, also, to the wear resulting from normal field conditions and weather adversities.

Still, systems that use cabling known from the prior art have drawbacks in terms of the number of peripherals, since the number of peripherals is limited by the number of cables that can be passed from the tractor to each peripheral.

In addition, wired systems are more restricted in terms of the inclusion of additional peripherals, since there is a need for skilled labor for the passage and installation of a new peripheral. Therefore, the costs and time required to improve the planter often make it impossible to install an additional peripheral.

Technologies are known in the prior art that use wireless peripheral control systems, at least in part of the path between the tractor and the peripherals. These solutions mainly replace cabling in regions of joints and junctions where they are more prone to wear.

A known document from the prior art is the patent US10,548,256 which discloses a wireless agricultural implement control system comprising a control module, an interface module and several remote modules, where the control module is provided with a user interface adapted to receive commands. The system disclosed in the US10,548,256 patent provides for wireless communication between modules, thus allowing to reduce the tension, wear and breakage of the cables of a planter.

Despite being functional and reducing the wear and tear related to cabling, the solution presented by patent US 10,548,256 is limited in relation to communication between the remote module and the peripherals, requiring a plurality of remote modules to interact with the same number of peripherals. Thus, for the installation of new peripherals, it is necessary to install a new remote module and all the specific structures and configurations for each new peripheral.

Another known technological solution for communication is CAN (Controller Area Network), also known as "CAN bus", which is a network standard designed for internal communication between devices inside a vehicle. Although it uses cables, the CAN bus is considered robust for vehicles, as it uses a message-based protocol and uses multiplexing to take advantage of vehicle electrical cabling.

Document US2017/0180152 discloses a bridging system between a CAN bus subsystem and a wireless communication module that uses two different wireless communication protocol versions.

Although the system disclosed by document US2017/0180152 allows communication between a CAN bus module and a wireless communication module, this system only reveals a communication bridge, not providing for processing between the modules.

In this way, it is evident to a person skilled in the art that, although there are technologies in the prior art for communication and control of agricultural implements, these solutions are limited to predefined manufacturing sizing and/or make it difficult to add and change peripheral devices.

Therefore, although apparently functional so far, the prior art communication and control systems for agricultural implements have some drawbacks and limitations mainly related to maintenance and installation of new peripheral devices.

### DESCRIPTION OF THE INVENTION

In order to circumvent the drawbacks of the prior art, the present invention deals with a communication and control system for peripheral equipment of agricultural implements, which comprises a human-machine interface, a first means of communication, a control module, a first processing means, a second communication means, a remote module, a second processing means and a third communication means.

According to additional or alternative embodiments of the present invention, the following features, and possible variants thereof, may also be present, alone or in combination:
- first communication means comprises a first transceiver in the human-machine interface in communication with a second transceiver in the control module;
- the second communication means comprises a third transceiver in the control module in communication with a fourth transceiver in the remote module;
- the third means of communication comprises a fifth transceiver in the remote module in communication with a sixth transceiver in one or more peripherals;
- the first processing means and the second processing means (8) can generate control signals and messages;
- the third means of communication transmits a message to the peripherals;
- one of the means of communication comprises an electromagnetic information transmission system, particularly radio frequency that uses one of the protocols: Bluetooth, WI-FI, Lora, Sigfox, proprietary protocol or mobile networks;
- the first means of communication uses the ISOBUS, CAN-BUS or proprietary protocol as standard;
- the system comprises at least two peripherals, the peripherals comprising one of actuator, sensor, intelligent sensor and intelligent engine;
- the actuator is a CAN engine;
- the actuator is an engine mounted on one of a seed meter, particulate or liquid material meter, depth regulator, conveyor belt and row unit lifting system;
- the human-machine interface comprises a positioning system (19) and an agricultural calculation system;
- the control module comprises a positioning system and the first processing means;
- the remote module comprises the second processing means;
- one of the means of communication is 2.4Ghz RF communication with proprietary protocol;
- each remote module is connected to a Hall motor, an encoder sensor of that Hall motor and to a CANBUS with one of a CAN actuator or a CAN sensor;
- the CAN actuator controls a conveyor belt; and
- the CAN sensor detects the passage of seeds.

In addition, the present invention also deals with a method of communication and control of peripheral equipment applied in agricultural implements, the method comprising the steps of:
receiving an instruction on a human-machine interface;
generate a first command message;
transmit the command message to the remote modules;
interpret the command message in the remote modules; and
if the peripheral is an intelligent actuator, generate a message; and
send the message to the smart actuator;
if the peripheral is an intelligent sensor, receive a message, generated by the intelligent sensor, on the remote module; and
interpret the peripheral smart sensor message;
if the peripheral is a simple control device, generate a control signal when the peripheral is an actuator and receive a monitoring signal when the peripheral is a sensor.

According to additional or alternative embodiments of the invention, the following features, alone or in technically possible combinations, may also be present:
- the method further comprises the steps of transmitting the first command message to a control module (36); interpreting the first command message and generating a second command message (28); transmitting the second command message to the remote modules (32); and interpreting the second command message on the remote modules (29).
- the first and second command messages are wireless command messages;
- the instruction is an ISOBUS message.
- the method additionally comprises the steps of obtaining positioning information by means of a location device; obtain an instruction by means of an agricultural calculating machine; and generate and transmit a command message.
- the locating device and the agricultural calculating machine can be arranged in the human-machine interface and/or in the control module.
- the first and second command messages are wireless command messages.

### BRIEF DESCRIPTION OF THE DRAWINGS

The objects, advantages and technical and functional improvements of the present invention will be better understood from the following description in relation to particular embodiments, which make reference to the accompanying figures, in which:
Figure 1 shows a schematic view of an embodiment of the invention;
Figure 2 shows a schematic view of an embodiment of the invention;
Figure 3 shows a schematic view of an embodiment of the invention;
Figure 4 shows a schematic view of the communication of an embodiment of the remote module of the invention;
Figure 5 shows a schematic representation of the communication of a remote module of the prior art; and
Figure 6 shows a flowchart of an embodiment of the method of the present invention.

### DESCRIPTION OF EMBODIMENTS OF THE INVENTION

The invention is now described with respect to its particular embodiments, with reference to the accompanying figures. In the following figures and description, equal or corresponding parts are marked with equal reference numbers.

The figures are schematic and their dimensions and proportions are exemplary, as they are only intended to describe the invention in order to facilitate understanding and do not impose any limitations beyond those defined by the appended claims.

The present invention deals with a system that uses CAN (Controller Area Network) serial communication bus, namely CAN bus, and wireless communication modules to transmit an instruction from a user to a peripheral device (16) in a row unit.

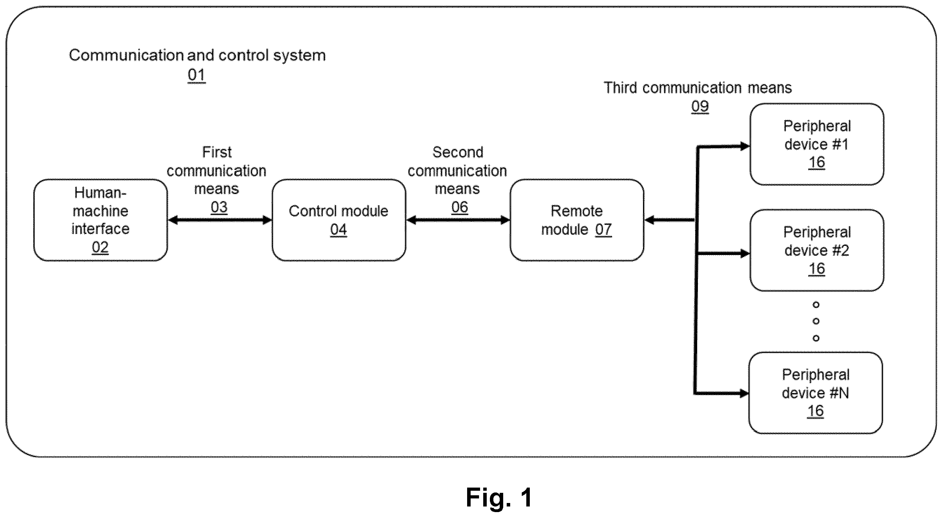

Figure 1 illustrates a general diagram of an embodiment of the invention that shows the communication relationship between the elements of the communication and control system (1) of peripheral equipment (16) of agricultural implements. More specifically, figure 1 shows that the human-machine interface (2) and the control module (4) have a communication established through a first communication means (3), the control module (4) and the remote module. (7) have communication established through a second communication means (6) and the remote module (7) establishes communication with the peripheral device (16) through a third communication means (9).

In particular, the third communication means (9) of the present invention provides for communication between a remote module (7) and a plurality of peripheral devices (16), whereby the peripheral devices (16) can be of different types and with different functions. So that a remote module (7) can interact with one of the peripheral devices (16) without interfering with the operation of the other peripheral devices (16).

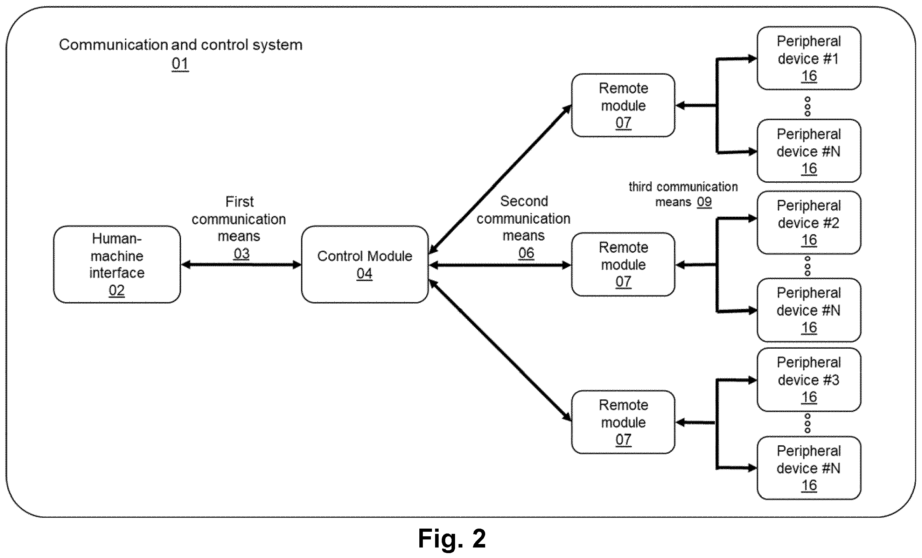

Figure 2 illustrates a general diagram of another embodiment of the invention, in which the control module (4) has communication established through the second communication means (6) with more than one remote module (7) and each remote module (7) is in communication with their respective peripheral devices (16) via the third communication means (9).

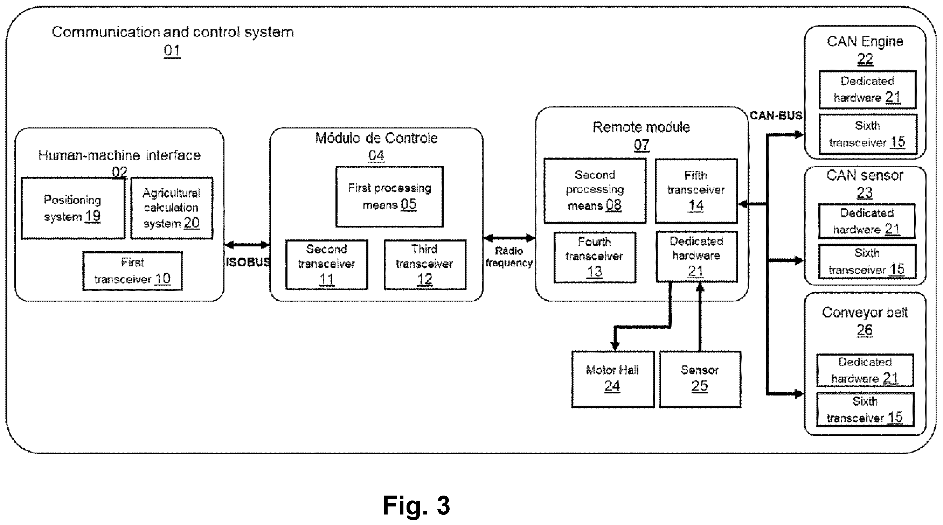

Figure 3 illustrates a detailed diagram of an embodiment of the invention in which the first communication means (3) uses an ISOBUS, the second communication means (6) is a radio frequency wireless means and the third communication means (9) uses a CAN BUS.

More specifically, in the embodiment of figure 3, the first communication means (3) has a first transceiver (10) at the man-machine interface (2) communicating via ISOBUS with a second transceiver (11) on the control module (4). As an alternative to the ISOBUS standard, the first communication means (3) can use CAN-BUS or other proprietary protocols.

In figure 3 it can also be seen that the Control Module (4) comprises a first processing means (5) and a third transceiver (12). The third transceiver (12) is part of the second communication means (6) together with the fourth transceiver (13) comprised in the remote module (7). In this embodiment, the control module (4) interprets the ISOBUS message received by the second transceiver (11), processes the received ISOBUS message and generates a new command message that is sent by the third transceiver (12) wirelessly to the remote module (7) through the fourth transceiver (13).

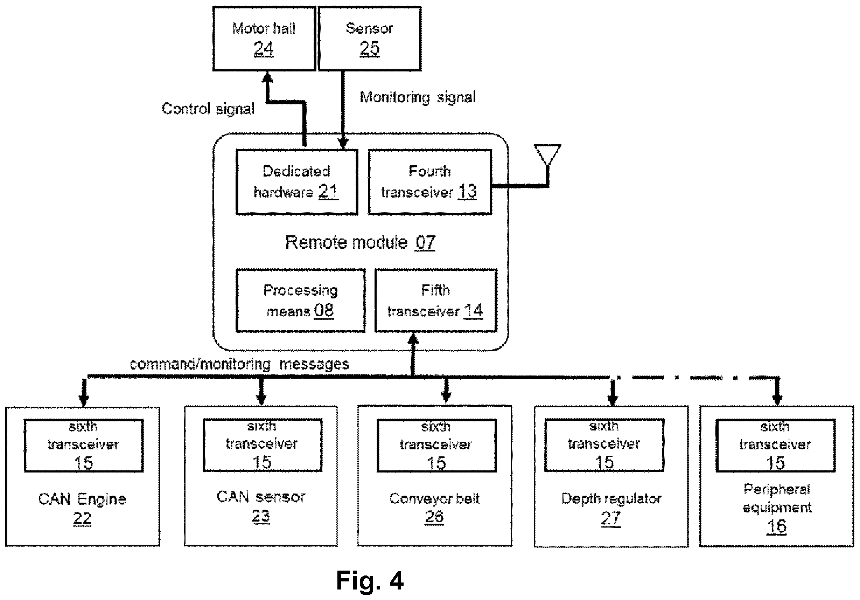

Still in the embodiment of figure 3 and in more detail in figure 4, the remote module (7) comprises a second processing means (8), a fifth transceiver (14) and a dedicated hardware for signal communication (17).

The fifth transceiver (14) is part of the third communication means (9) and communicates with a sixth transceiver (15) on each of the peripheral devices (16) of the plurality of peripheral devices (16) that can be used simultaneously in the system (1) of the present invention. The third means of communication (9) is used when the peripheral device (16) operates by message (18) such as, for example, an intelligent actuator (22), such as a CAN actuator, or an intelligent sensor (23), such as a CAN sensor, also known as "smart devices".

The dedicated hardware of the remote module (7) is used to communicate with peripheral devices (16) that operate by signals. More specifically by way of example, an actuator (24), such as a Hall motor, which operates by receiving a control signal (17a) from dedicated hardware (21) or a sensor (25) that sends a monitoring signal (17b) to dedicated hardware (21).

A person skilled in the art will readily appreciate that the fifth transceiver (14) and the dedicated hardware (21) are described together as an example in this embodiment of the invention, but do not necessarily work together, only the fifth transceiver (14) or the dedicated hardware (21) can be used without prejudice to the operation of the communication and control system (1). Likewise, the communication and control system (1) of the present invention allows the use of both types of communication simultaneously without one interfering in the operation of the other, with the fifth transceiver (14) being used when the peripheral device (16) operates by message (18) and the dedicated hardware (21) is used when the peripheral device (16) operates with a control or monitoring signal (17).

Figure 4 still illustrates some examples of smart devices that can use the third means of communication (9), being an intelligent seed meter (22), a conveyor belt (26), a depth regulator (27) and a smart seeds sensor (23), among other agricultural devices.

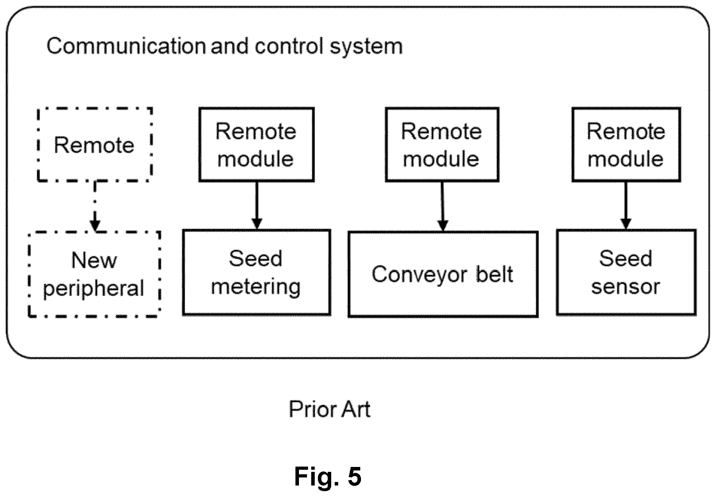

In addition, the system (1) of the present invention advantageously allows the inclusion of new peripheral devices (16) not foreseen during the design and manufacture of the row unit, simply installing the new peripheral device (16) and starting communication with a remote module (7) via the third communication means (9). Unlike what is known in the prior art where only one peripheral device (previously foreseen) is installed per module, the system of the present invention allows a new peripheral device (16) to be included in the system taking advantage of a remote module (7) already installed in the row unit, as can be seen in the comparison of figure 5.

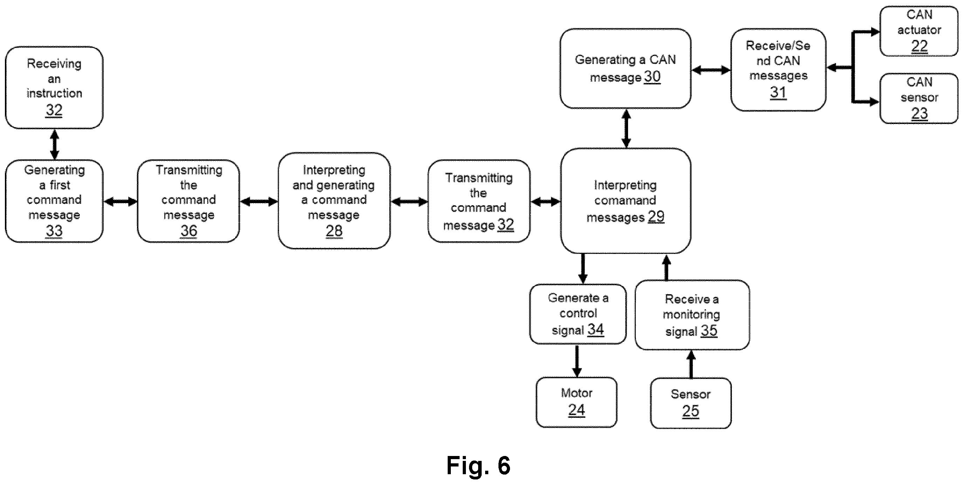

The present invention also provides a method of communication and control of peripheral devices (16) applied in agricultural implements, as illustrated in figure 6, in which
- a user enters an instruction into a human-machine interface (2), which processes the instruction and
- generates a message, preferably an ISOBUS message, and
- sends the message to a control module (4),
- the control module (4) processes the message to interpret the instruction and generate a wireless command message,
- the message is sent from the control module (4) to a remote module (7) by means of wireless communication, then
- the remote module (7) receives the wireless message, processes the message to interpret the instruction and,
- if the instruction is intended for an intelligent peripheral device, a message is generated, preferably CAN, and sent to the peripheral device; or
- if the instruction is intended for a simple control peripheral device, such as a Hall motor, a control signal is generated and sent to the peripheral device; or
- if the instruction is intended for a simple monitoring peripheral device, such as a seed sensor, a monitoring signal is received which is processed in the remote module (7).

Thus, based on its unique characteristics, it is noted that the present invention presents advantages and overcomes the drawbacks of prior art.

While the invention has been specifically described with respect to particular embodiments, it is to be understood that variations and modifications will be apparent to those skilled in the art and may be made without departing from the scope of protection of the present invention. Consequently, the scope of protection is not limited to the described embodiments, but is limited only by the appended claims, the scope of which must include all equivalents.

## Claims

1. Communication and control system (1) of peripheral equipment for agricultural implements, **characterized in that** it comprises a human-machine interface (2), a first communication means (3), a control module (4), a first processing means (5), a second communication means (6), a remote module (7), a second processing means (8) and a third communication means (9).

2. System (1) according to claim 1, **characterized in that** said first means of communication (3) comprises a first transceiver (10) at the human-machine interface (2) in communication with a second transceiver (11) on the control module (4).

3. System (1) according to claim 1, **characterized in that** the second communication means (6) comprises a third transceiver (12) in the control module (4) in communication with a fourth transceiver (13) in the remote module (7).

4. System (1), according to claim 1, **characterized in that** the third means of communication (9) comprises a fifth transceiver (14) in the remote module (7) in communication with a sixth transceiver (15) in one or more peripherals (16).

5. System (1), according to claim 1, **characterized in that** the first processing means (5) and the second processing means (8) can generate control signals (17) and messages (18).

6. System (1), according to claim 1, **characterized in that** the third communication means (9) transmits a message (18) to the peripherals (16).

7. System (1), according to claim 1, **characterized in that** one of the means of communication (3, 6, 9) comprises an electromagnetic information transmission system.

8. System (1), according to claim 7, **characterized in that** said electromagnetic information transmission system is radiofrequency.

9. System (1), according to claim 8, **characterized in that** said radiofrequency electromagnetic information transmission system uses one of the following protocols: Bluetooth, WI-FI, Lora, Sigfox, proprietary protocol or mobile networks.

10. System (1), according to claim 1, **characterized by** the first means of communication (3) uses the ISOBUS, CAN-BUS or proprietary protocol standard.

11. System (1), according to claim 4, **characterized in that** it comprises at least two peripherals (16), and the peripherals comprise one of the actuator (24), sensor (25), intelligent sensor (23) and actuator smart (22).

12. System (1), according to claim 11, **characterized in that** the intelligent actuator (22) is a CAN engine.

13. System (1), according to claim 3, **characterized in that** said actuator (24) is an engine mounted in one of a seed meter, particulate or liquid material meter, depth regulator, conveyor belt and row unit lifting system;

14. System (1), according to claim 1, **characterized in that** the human-machine interface (2) comprises a positioning system (19) and an agricultural calculation system (20).

15. System (1), according to claim 1, **characterized in that** the control module (4) comprises a positioning system (19) and the first processing means (5).

16. System (1), according to claim 1, **characterized in that** the remote module (7) comprises the second processing means (8).

17. System (1), according to claim 1, **characterized by** the fact that one of the means of communication (3, 6, 9) is a 2.4Ghz RF communication with a proprietary protocol.

18. System (1), according to claim 1, **characterized in that** each remote module (7) is connected to a Hall motor (24), an encoder sensor of this engine and a CANBUS with one of a CAN actuator (22) or a CAN sensor (23).

19. System (1), according to claim 18, **characterized in that** the CAN actuator controls a conveyor belt (26).

20. System (1), according to claim 18, **characterized in that** the CAN sensor (23) detects the passage of seeds.

21. Method of communication and control of peripheral equipment applied to agricultural implements, **characterized by** comprising the steps of:
receiving an instruction in a human-machine interface (32);
generating a first command message (33);
transmitting the command message to the remote modules (32);
interpreting the command message in the remote modules (29); and
if the peripheral is an intelligent actuator, generating a message (30); and
sending the message to the smart actuator (31);
if the peripheral is an intelligent sensor, receive a message (31), generated by the intelligent sensor, in the remote module (07); and
interpreting the message from the peripheral smart sensor (29);
if the peripheral is a simple control device, generate a control signal (32) when the peripheral is an actuator and receive a monitoring signal (33) when the peripheral is a sensor.

22. Method, according to claim 21, **characterized in that** it additionally comprises the steps of:
transmitting the first command message to a control module (36);
interpreting the first command message and generating a second command message (28);
transmitting the second command message to the remote modules (32); and
interpreting the second command message on the remote modules (29).

23. Method according to claim 22, **characterized in that** the first and second command messages are wireless command messages.

24. Method according to claim 21, **characterized in that** the instruction is an ISOBUS message.

25. Method, according to claim 21, **characterized in that** it additionally comprises the steps of:
obtaining positioning information through a positioning system (19);
obtaining an instruction by means of an agricultural calculating machine (20); and
generate and transmit a command message.
